# FASCICULE DE BREVET EUROPEEN

(11) **EP 2 475 871 B1**
(45) Date de publication et mention de la délivrance du brevet: **21.01.2015**
(21) Numéro de dépôt: 10770544.4
(22) Date de dépôt: 09.09.2010
(51) Int. Cl.: F03B 17/06, F03B 13/26

(54) **TURBOMACHINE HYDRAULIQUE À MAINTENANCE SIMPLE**
WARTUNGSARMER HYDRAULISCHER TURBINENMOTOR
EASY MAINTENANCE HYDRAULIC TURBINE ENGINE

(30) Priorité: 09.09.2009 FR 0956120
(43) Date de publication de la demande: 18.07.2012
(73) Titulaire: Electricité de France, 75008 Paris (FR); Hydroquest, 38400 Saint Martin d'Heres (FR)
(72) Inventeur: JAQUIER, Thomas, F-38100 Grenoble (FR); ACHARD, Jean-Luc, F-38100 Grenoble (FR); ZANETTE, Jeronimo, F-38100 Grenoble (FR)
(74) Mandataire: de Beaumont, Michel
(86) Numéro de dépôt international: PCT/FR2010/051883
(87) Numéro de publication internationale: WO 2011/030067

(56) Documents cités:
- WO-A1-2004/048774
- FR-A1- 2 865 777
- FR-A1- 2 882 109
- FR-A1- 2 922 606
- GB-A- 2 431 628

## Description

### Domaine de l'invention

La présente invention concerne une turbomachine hydraulique à flux transverse constituée d'une succession d'étages de turbines associés à au moins un étage de génératrice.

### Exposé de l'art antérieur

La demanderesse a déposé un ensemble de demandes de brevet sur des turbomachines hydrauliques à flux transverse parmi lesquelles on peut mentionner :
- la demande de brevet français 04/50209 déposée le 4 février 2004 (B6412) relative à une turbomachine hydraulique à flux transverse comportant une colonne de turbines, chaque turbine comprenant des pales en forme d'ailes volantes en V ;
- la demande de brevet français 05/50420 déposée le 14 février 2005 (B6869) relative à une structure de maintien destinée à rigidifier une colonne de turbines et à éviter sa déformation ; et
- la demande de brevet français 07/58511 déposée le 23 octobre 2007 (B8450) relative à une turbomachine constituée d'un assemblage de deux colonnes jumelles tournant en sens inverse.

Les divers systèmes modulaires de turbomachines hydrauliques à flux transverse sont généralement montés sur des assises ou fondations lourdes reposant sur un fond marin ou fluvial.

Dans tous ces systèmes, il est souhaitable de pouvoir remonter la turbomachine pour son entretien ou sa réparation, puis de la remettre en place. Ces opérations sont souvent particulièrement complexes et/ou nécessitent l'utilisation de navires dédiés munis d'équipements dédiés.

Le document GB 2 431 628 divulgue un appareil pour déployer un groupe électrogène submergé.

### Résumé

La présente invention vise à prévoir un assemblage de colonne de turbomachine propre à un montage et un démontage simples à partir de navires standard munis d'équipements standard.

Ainsi, un mode de réalisation de la présente invention prévoit une turbomachine hydraulique comprenant, entre une assise et une succession d'étages de turbine associés à au moins une génératrice, un bloc de guidage fixé de façon amovible à l'étage inférieur de la turbomachine et s'emboîtant sur l'assise, ce bloc de guidage contenant des enrouleurs de câbles de guidage dont les extrémités sont fixées de façon permanente à l'assise.

Selon un mode de réalisation de la présente invention, les enrouleurs sont des treuils motorisés.

Selon un mode de réalisation de la présente invention, l'assise comprend des broches verticales dans lesquelles viennent s'emboîter des éléments complémentaires du bloc de guidage, les câbles de guidage étant fixés auxdites broches.

Selon un mode de réalisation de la présente invention, la turbomachine comprend une partie active et une structure de maintien fixée à l'assise, dans laquelle la seule partie active est amovible.

Selon un mode de réalisation de la présente invention, la structure de maintien comprend des montants verticaux en forme de fourreaux fendus, et la partie active comprend des montants latéraux aptes à s'insérer dans lesdits montants en forme de fourreaux, les câbles de guidage passant dans une partie inférieure des montants de la partie active de la machine et étant fixés au bas des montants en forme de fourreaux.

Selon un mode de réalisation de la présente invention, les montants en forme de fourreaux comprennent des loquets de blocage qui viennent se fermer quand les montants latéraux de la partie active de la turbomachine sont extraits des montants en forme de fourreaux, de façon à maintenir les câbles de guidage à l'intérieur des montants.

Selon un mode de réalisation de la présente invention, la turbomachine comporte deux colonnes jumelles et l'assise comprend un pieu central dans lequel vient s'engager une partie centrale de la turbomachine.

Selon un mode de réalisation de la présente invention, le pieu monte jusqu'au niveau de la surface du milieu liquide dans lequel est immergée la turbomachine.

Un mode de réalisation de la présente invention prévoit un procédé de démontage d'une turbomachine telle que ci-dessus, à partir d'un bâtiment muni de moyens de levage et de moyens de préhension, comprenant les étapes consistant à amener le bâtiment sur site ; lever la turbomachine à partir des moyens de levage fixés à une partie supérieure de la turbomachine ; une fois que le haut de la turbomachine a atteint le niveau du navire, saisir par les moyens de préhension le bloc de guidage ; démonter étage par étage la turbomachine tandis que l'on monte par paliers la turbomachine à l'aide des moyens de préhension ; et redescendre le bloc de guidage jusqu'à l'embrocher dans l'assise vers laquelle il est guidé par les moyens de guidage.

Un mode de réalisation de la présente invention prévoit un procédé de montage d'une turbomachine telle que ci-dessus, à partir d'un bâtiment muni de moyens de levage et de moyens de préhension, comprenant les étapes consistant à amener le bâtiment sur site ; lever le bloc de guidage à partir des moyens de levage fixés à une partie supérieure du bloc de guidage ; une fois que le bloc de guidage a atteint le niveau du navire, le saisir par les moyens de préhension ; monter étage par étage la turbomachine tandis que l'on descend par paliers la turbomachine à l'aide des moyens de préhension ; et descendre la turbomachine à partir des moyens de levage fixés à une partie supérieure de la turbomachine jusqu'à embrocher le bloc de guidage dans l'assise.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue en perspective éclatée d'une turbomachine ;
les figures 2A et 2B sont des vues en perspective simplifiées d'une turbomachine hydraulique à flux transverse respectivement à l'état monté et dans une phase intermédiaire de relevage ;
la figure 3 est une vue en perspective simplifiée d'un bloc de guidage utilisé dans la turbomachine des figures 2A et 2B ;
Les figures 4A à 4F illustrent des étapes successives de remontée d'une colonne de turbomachine ;
les figures 5A à 5F illustrent des étapes successives de redescente d'une colonne de turbomachine ;
les figures 6A et 6B sont des vues en perspective représentant une colonne de turbomachine à structure de maintien à l'état monté et dans une phase intermédiaire de relevage ;
la figure 6C est une vue en perspective d'un bloc de guidage utilisé dans la turbomachine des figures 6A et 6B ;
les figures 6D et 6E représentent des détails de la turbomachine des figures 6A à 6B ;
Les figures 7A à 7F illustrent des étapes successives de remontée d'une colonne de turbomachine à structure de maintien ;
les figures 8A et 8B sont des vues en perspective d'une turbomachine à carénage à l'état monté et dans une phase intermédiaire de relevage ;
les figures 9A et 9B sont des vues en perspective d'une turbomachine à colonnes jumelles à l'état monté et dans une phase intermédiaire de relevage ;
les figures 10A et 10B représentent un autre exemple de turbomachine à colonnes jumelles à l'état monté et dans une phase intermédiaire de relevage ;
la figures 11 est une vue en perspective d'une variante de turbomachine à carénage dans une phase intermédiaire de relevage ; et
la figure 12 représente encore un autre exemple de turbomachine à colonnes jumelles dans une phase intermédiaire de relevage.

Par souci de clarté, des éléments identiques ou équivalents ont été désignés par de mêmes références dans les différentes figures. De plus, quand de mêmes éléments sont reproduits dans des figures successives, les références correspondantes n'ont pas été systématiquement répétées.

### Description détaillée

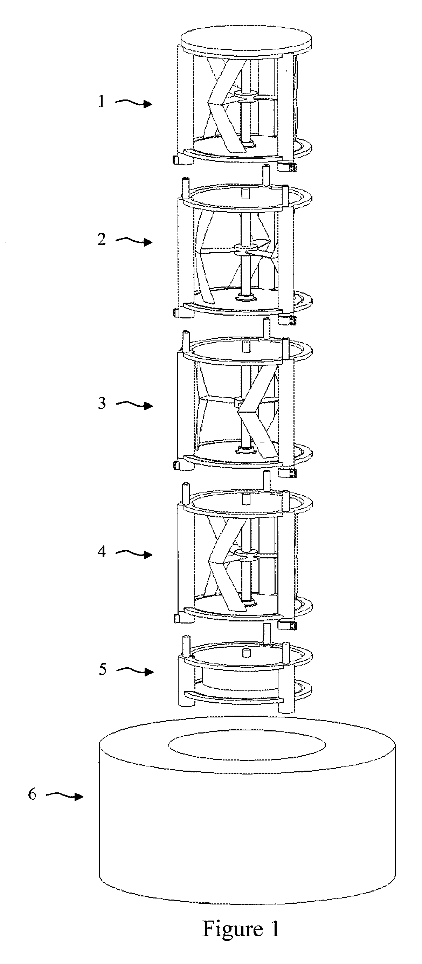

La figure 1 est une vue en perspective éclatée d'un exemple simplifié de turbomachine hydraulique à flux transverse à une seule colonne. Cette turbomachine comprend quatre étages de turbines 1, 2, 3, 4 et un étage de génératrice 5. Ces étages ont un arbre commun, les étages de turbine étant par exemple du type décrit dans la demande de brevet français 04/50209 susmentionnée. Chacun des étages comprend des moyens d'assemblage avec le ou les étages adjacents et il est prévu des moyens de couplage (non représentés) entre les arbres des turbines et de la génératrice. La turbomachine comprend en outre un bloc de guidage 6 contenant des enrouleurs/dérouleurs ou treuils dont la fonction sera exposée ci-après. Dans l'exemple représenté, la génératrice 5 s'insère dans ce bloc de guidage 6.

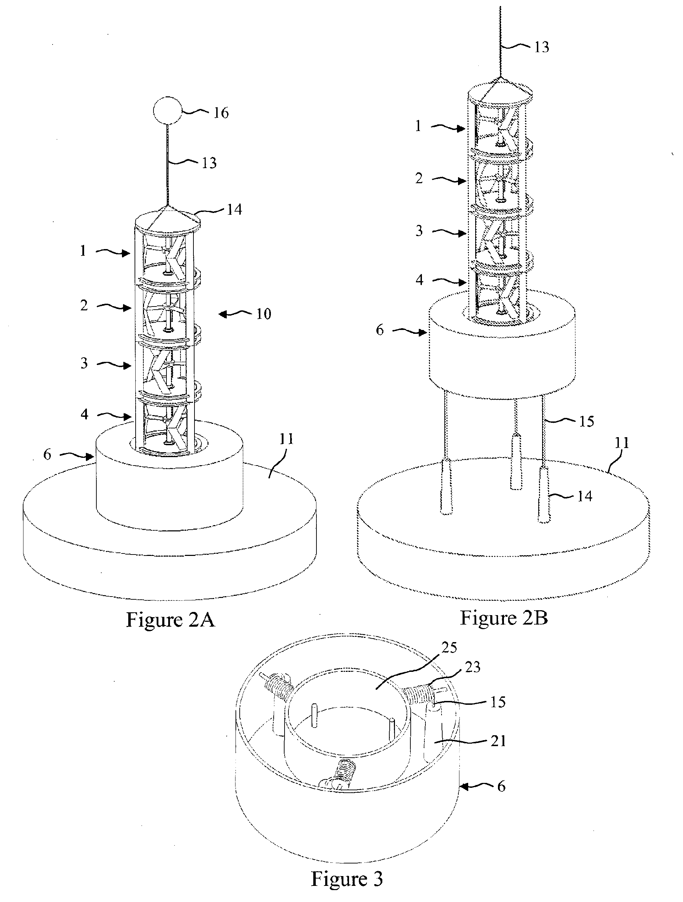

La figure 2A représente une turbomachine à colonne unique 10 du même type que celle illustrée en vue explosée en figure 1, à l'état assemblé. Le socle 6 repose sur une assise ou fondation 11. L'assise 11 est représentée façon très symbolique. En général, il s'agira d'un bloc de masse importante destinée à assurer le maintien de la turbomachine sur un fond marin ou fluvial à un emplacement où il existe un courant susceptible d'entraîner les turbines. Des moyens de préhension ou d'accrochage 13 sont reliés à une plaque supérieure 14 de la turbomachine. Ils sont par exemple constitués d'un câble accroché à cette plaque supérieure, l'extrémité du câble étant reliée à une bouée 16.

La figure 2B représente la turbomachine 10, dans un état dans lequel elle est tirée vers le haut par le câble 13. Des broches 14 s'étendent vers le haut à partir de la fondation. A chacune de ces broches (ou dans chacune de ces broches) est fixé un câble de guidage 15 provenant d'un enrouleur ou treuil du bloc de guidage 6.

La figure 3 est une vue en perspective du bloc de guidage 6, sans sa plaque supérieure. Du côté de la face inférieure du bloc 6, sont formées des ouvertures, de préférence entourées d'un gainage conique 21, adaptées à s'accoupler avec les broches 14 pour maintenir la turbomachine en position quand elle est posée sur l'assise 11. Les câbles de guidage 15 illustrés en figure 2B sont enroulés autour d'un enrouleur ou treuil 23. Une zone centrale 25 du bloc de guidage 6 est destinée à recevoir la génératrice 5. Des moyens de fixation entre cette génératrice ou autre élément de structure de la turbomachine (non représentés) sont également prévus. Chacun des enrouleurs 23 permet de dérouler les câbles de guidage 15 en maintenant une certaine tension quand on tire sur la colonne au moyen du câble 13 pour la faire remonter. Inversement, ces enrouleurs sont adaptés à maintenir en tension les câbles de guidage 15 lors de la redescente d'une colonne. Pour optimiser cette opération de redescente et assurer un emboîtement fiable du bloc de guidage dans les broches 14 de l'assise, on prévoit de préférence que chacun des enrouleurs 23 est un treuil associé à un élément moteur, par exemple électrique ou pneumatique, non représenté.

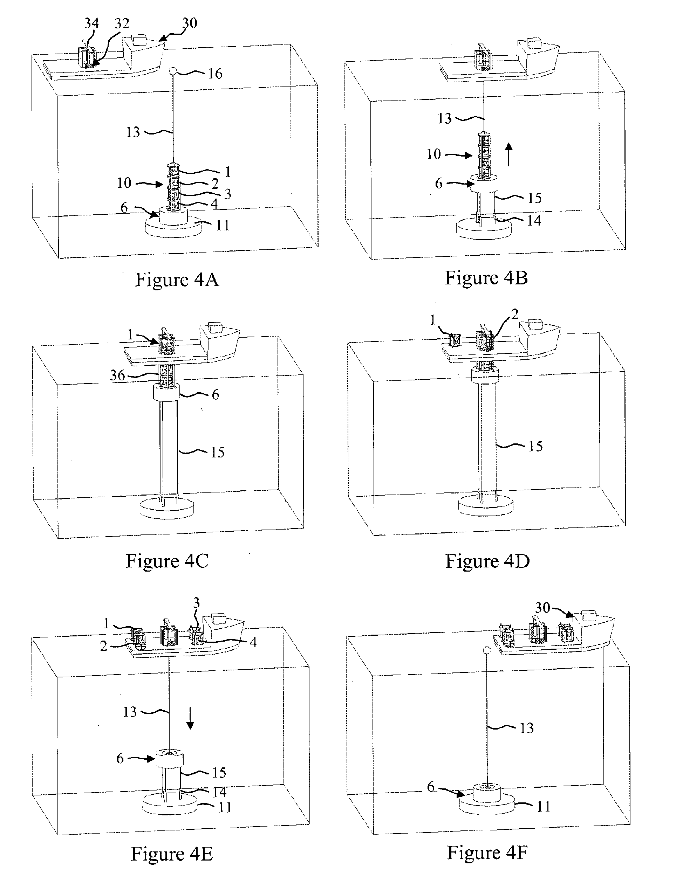

Les figures 4A à 4F illustrent des étapes de démontage d'une turbomachine hydraulique à colonne unique, du type de celle des figures 1 à 3, par exemple en vue d'une opération de maintenance.

Les opérations sont réalisées à partir d'un navire classique 30 muni d'un puits d'accès 32 associé à des moyens de levage 34. On a représenté un navire à puits d'accès central. On pourra également prévoir que les opérations sont réalisées à partir de la plateforme arrière d'un navire, d'une barge tirée par un navire ou d'un navire de type ponton-bigue.

En figure 4A, un navire arrive sur le site et repère la bouée 16 du câble de traction 13. On notera que la présence d'une bouée 16 associée à un câble de traction 13 ne constitue qu'un exemple de réalisation possible. On pourrait prévoir que le sommet de la turbomachine comprend un moyen de signalisation actif ou passif repérable à partir du bâtiment. Le bâtiment peut alors envoyer vers le sommet de la turbomachine un moyen d'accrochage approprié, par exemple un système à crochets ou un système à électroaimants.

A l'étape illustrée en figure 4B, le navire a accroché le câble 13 aux moyens de levage 34 et a commencé à soulever la turbomachine tandis que les câbles 15 solidaires des broches 13 se déroulent au fur et à mesure que le bloc de guidage 6 monte.

Pour se faire une idée des moyens nécessaires à cette opération, on notera, uniquement à titre d'exemple, que si les éléments de turbine ont un diamètre de l'ordre de 3 mètres et une hauteur de l'ordre de 3 mètres, chaque élément pèsera un poids de l'ordre d'une tonne, poids qui peut être inférieur si les éléments des turbines sont en un matériau composite. Ainsi, la structure à soulever aura un poids de l'ordre de 5 tonnes.

A l'étape de la figure 4C, le haut de la turbomachine, correspondant sensiblement à l'étage supérieur 1 est mis hors d'eau. A ce moment, le bloc de guidage 6 est saisi à partir de moyens appropriés prévus sur le navire, par exemple des vérins 36 dont la partie inférieure est munie d'électroaimants d'accrochage. Alors, le câble 13 peut être décroché, et l'étage supérieur 1 démonté.

A l'étape représentée en figure 4D, l'étage supérieur de turbine 1 a été démonté et placé sur le pont du navire. Les vérins 36 ont été relevés pour faire apparaître le deuxième étage de turbine 2. A nouveau, cet étage est démonté et mis sur le côté.

A l'étape illustrée en figure 4E, les quatre étages de turbines 1 à 4 ont été démontés et placés sur le pont du navire, ainsi que la génératrice si son démontage est nécessaire. Après quoi, le câble 13 est accroché à la partie supérieure du bloc de guidage 6 et le bloc de guidage est amené à redescendre le long du câble 13 tout en étant guidé, et éventuellement entraîné, par les câbles 15.

Enfin, à l'étape représentée en figure 4F, le bloc de guidage est remis en place sur l'assise 11 et le navire reprend sa route pour transporter les divers étages de la turbomachine vers un atelier d'entretien, s'il n'est pas équipé pour les entretenir in situ.

Comme on l'a indiqué précédemment, les câbles 15 sont reliés à des enrouleurs/dérouleurs qui assurent la tension de ces câbles pendant la redescente. De préférence, ces enrouleurs sont des treuils motorisés. Une source d'énergie, par exemple un câble électrique ou une conduite pneumatique est reliée à partir du bâtiment à ces moteurs pour les actionner, ce qui peut aider à l'emboîtement du bloc de guidage 6 sur les broches 14 de l'assise ou fondation 11. Une fois le bloc de guidage en place, le câble électrique ou la conduite pneumatique pourra être désolidarisé du bloc de guidage par arrachement et remonté sur le navire, ou pourra être maintenu en place au niveau du bloc de guidage, sa partie supérieure étant accrochée à la bouée 16 si une telle bouée est prévue.

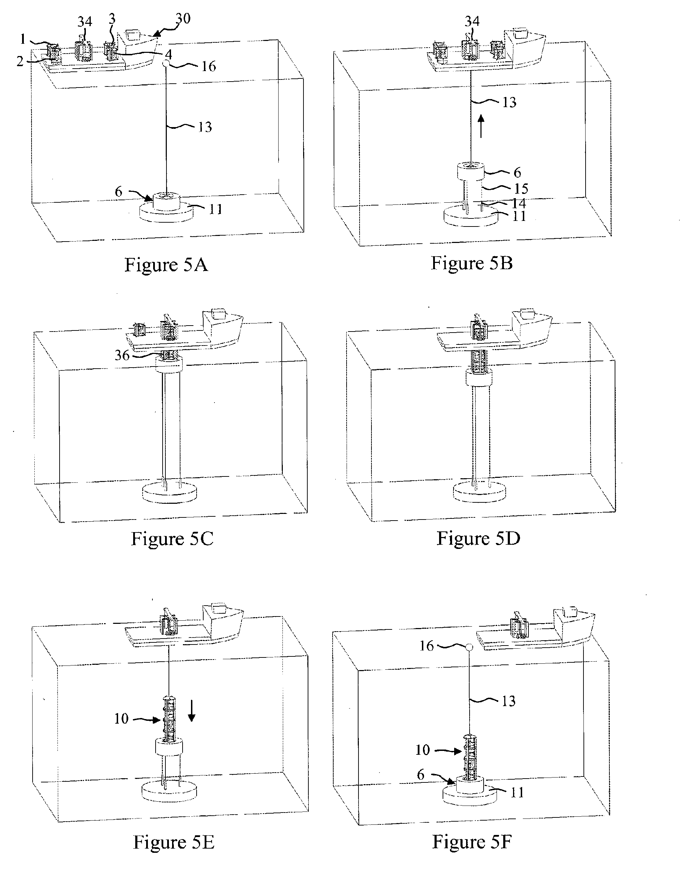

Les figures 5A à 5F illustrent des étapes successives de remise en place d'une turbomachine du type de celle des figures 1 à 3.

On notera que ces étapes de remise en place peuvent être effectuées directement après les étapes décrites en relation avec la figure 4D, avant redescente du bloc de guidage si une inspection des divers étages a révélé leur bon état, si le navire a amené des étages de remplacement, ou encore si les opérations de maintenance ont pu être effectuées directement à bord du navire.

On supposera toutefois ci-après que l'on part de l'état illustré en figure 4F, reproduit en figure 5A.

Dans cette figure 5A, on a représenté le bâtiment 30 muni d'étages de turbine de remplacement. A nouveau, le navire repère la bouée 16 ou autre moyen de signalisation et se met en position.

A l'étape illustrée en figure 5B, on a commencé à remonter le bloc de guidage 6 à l'aide des moyens de levage 34.

Comme l'illustrent les figures 5C et 5D, alors que le bloc de guidage 6 est lié au navire par des vérins à électroaimants 36 ou autres moyens d'accrochage et de levage, les différents étages sont montés successivement sur le bloc de guidage 6.

Après quoi, la turbomachine 10 est descendue progressivement comme l'illustre la figure 5E et mise en place comme l'illustre la figure 5F, de la même façon que cela a été décrit précédemment pour la redescente du bloc de guidage seul.

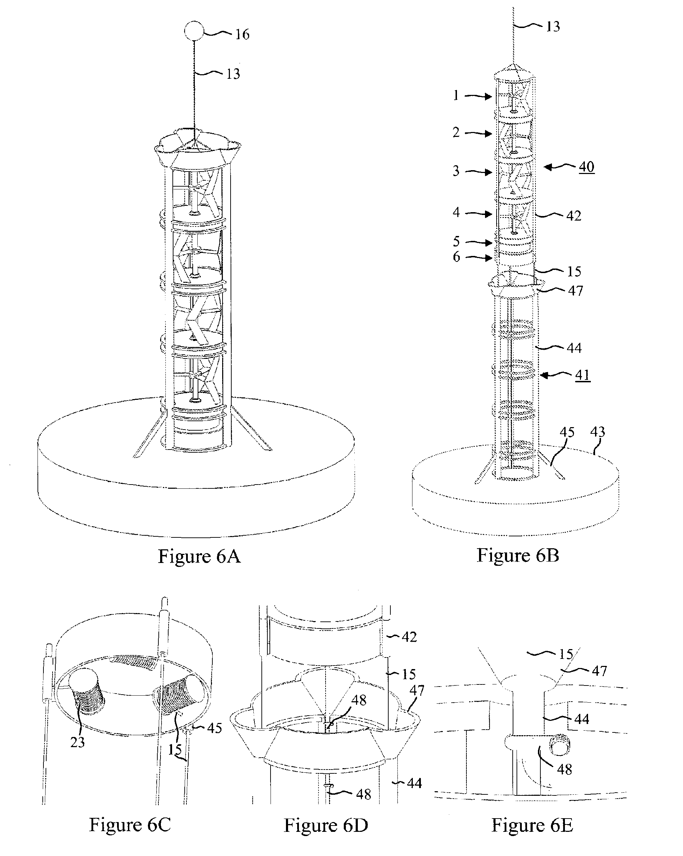

Les figures 6A à 6E illustrent le cas d'une turbomachine associée à une structure de maintien, par exemple comme cela est décrit dans la demande de brevet français 05/50420 susmentionnée.

La figure 6A est une vue en perspective simplifiée illustrant un tel type de turbomachine alors qu'elle est mise en place et la figure 6B représente cette turbomachine alors que sa partie active 40 est soulevée par rapport à la structure de maintien 41. On rappellera que l'avantage d'une telle réalisation à structure de maintien est que les éléments actifs peuvent être plus légers, la résistance aux efforts étant essentiellement assurée par la structure de maintien 41. Dans cet exemple, la turbomachine 40 comprend quatre étages de turbine 1, 2, 3, 4 et un étage de génératrice 5, l'ensemble étant fixé à un bloc de guidage inférieur 6. La turbomachine 40 comprend des montants latéraux 42 qui sont susceptibles de s'engager dans des montants fendus formant fourreaux 44 de la structure de maintien. La structure de maintien 41 est directement fixée à une fondation 43. On pourra prévoir des renforts latéraux 45 pour renforcer la structure. Chaque montant 44 de la structure de maintien comporte de préférence un évasement supérieur 47 pour faciliter l'introduction des montants 42 de la turbomachine. Comme précédemment, des câbles 15 montés sur des enrouleurs du bloc de guidage 6 sont reliés à l'assise. Cette fois-ci, ils passent à l'intérieur des montants creux 44 de la structure de maintien pour guider l'insertion des montants 42 dans les montants 44.

La figure 6C représente un détail du bloc de guidage. Des câbles 15 enroulés autour des treuils 23 sortent latéralement du bloc de guidage dans des montants latéraux 45 de ce bloc de guidage faisant partie de l'ensemble de montants 42 illustré en figure 6B.

La figure 6D représente un agrandissement de la partie supérieure de la structure de maintien 41. On y voit mieux un exemple des évasements 47 des montants creux 44 dans lesquels viennent s'engager les montants 42 de la turbomachine proprement dite et les câbles de guidage 15.

Comme le représente la vue de détail de la figure 6E, pour éviter que les câbles 15 ne risquent de sortir des montants 44 quand les montants 42 ont été sortis de ces montants 44 et que la turbomachine proprement dite n'est pas engagée dans la structure de maintien, on pourra prévoir un loquet 48 équipé d'un ressort de torsion. Ce loquet est en position basse quand les montants 42 sont engagés dans les montants 44 et remontent automatiquement dans la position représentée quand ces montants 42 ont dépassé le niveau des loquets. Le câble 15 est ainsi guidé au niveau de la partie haute des montants 44. Comme le représente la figure 6D, on pourra prévoir plusieurs loquets 48 le long d'un montant creux 44.

Une fois la partie active 40 de la turbomachine remontée au niveau d'un navire, son démontage et son remontage seront similaires à ceux décrits précédemment en relation avec les figures 4A-4F et 5A-5F. L'avantage des modes de réalisation des figures 6A à 6E est, comme on l'a indiqué, que la structure à déplacer a un poids plus faible que dans le cas de la réalisation des figures 1 à 3. Inversement, à poids donné, on pourra prévoir une colonne à plus grand nombre d'étages.

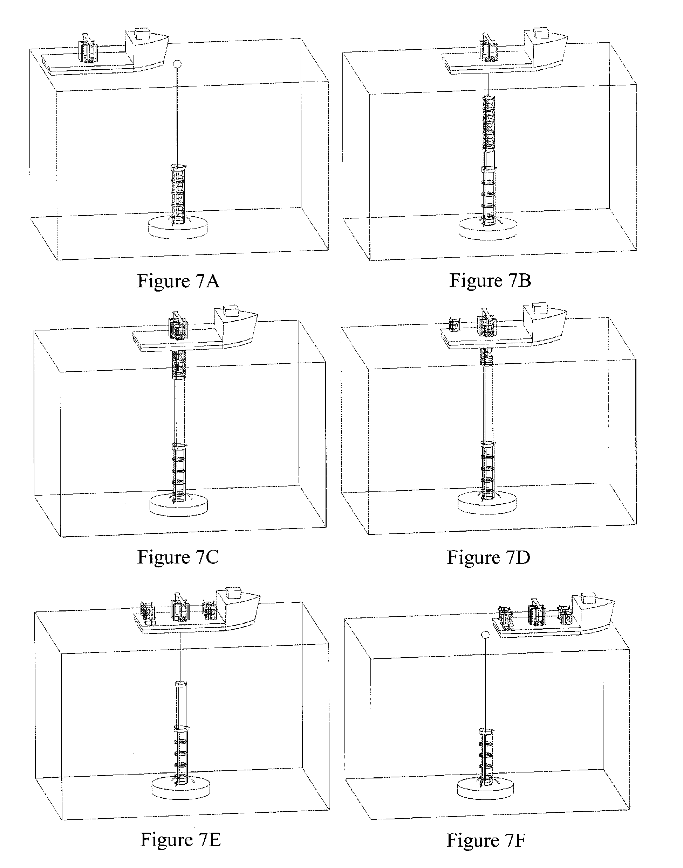

Les figures 7A à 7F sont des vues schématiques illustrant la remontée d'une colonne de turbomachine du type de celle des figures 6A et 6B.

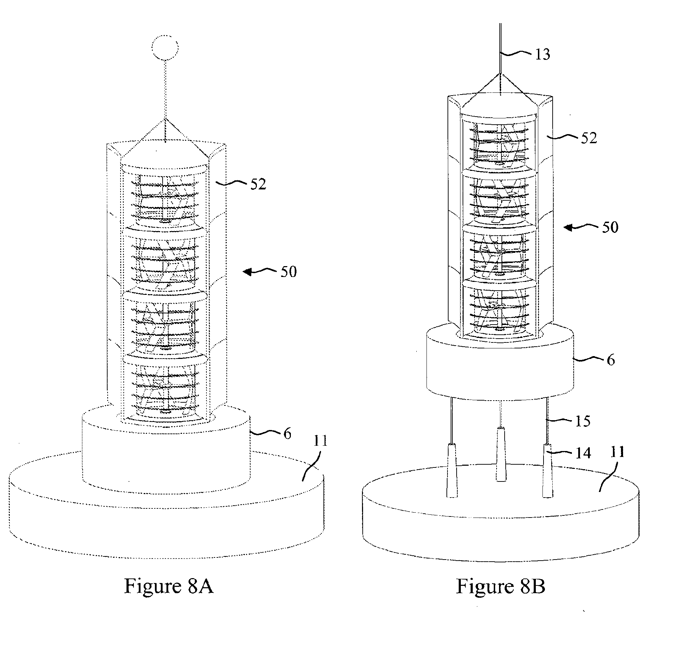

Les figures 8A et 8B sont des vues en perspective d'une autre réalisation de turbomachine à colonne unique dans laquelle la turbomachine 50 est une turbomachine munie d'un carénage 52 lui permettant avantageusement de s'orienter automatiquement par rapport au sens d'un courant. La turbomachine est montée sur une partie centrale (non représentée) du bloc de guidage 6 libre à rotation autour d'un axe vertical par rapport à l'assise 11.

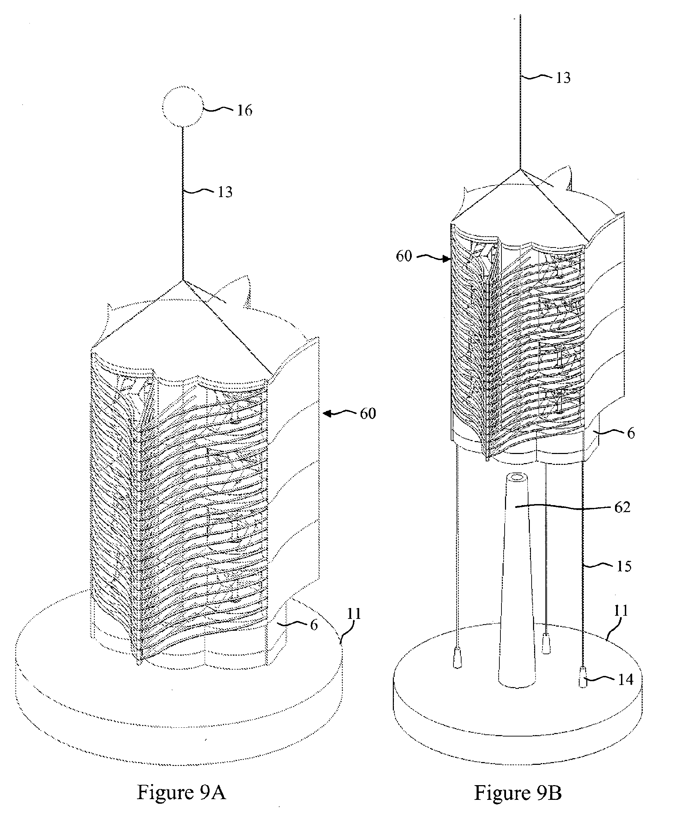

Les figures 9A et 9B représentent un exemple dans lequel la turbomachine 60 comporte deux colonnes jumelles tournant en sens inverse, du type décrit dans la demande de brevet français 07/58511 susmentionnée. Comme précédemment, il est prévu en bas de la structure un bloc de guidage 6 comprenant des enrouleurs ou treuils non représentés sur lesquels sont montés des câbles de guidage 15. En outre, dans l'exemple représenté, en plus des broches 14 d'emboîtement du bloc de maintien 6, est prévu un pieu central 62 ayant sensiblement la hauteur de la turbomachine et destiné à renforcer sa rigidité et à améliorer sa fixation. Comme dans le cas de la turbomachine monocolonne à carénage des figures 8A et 8B, la turbomachine est montée sur une partie centrale (non représentée) du bloc de guidage 6 libre à rotation autour d'un axe vertical par rapport à l'assise 11.

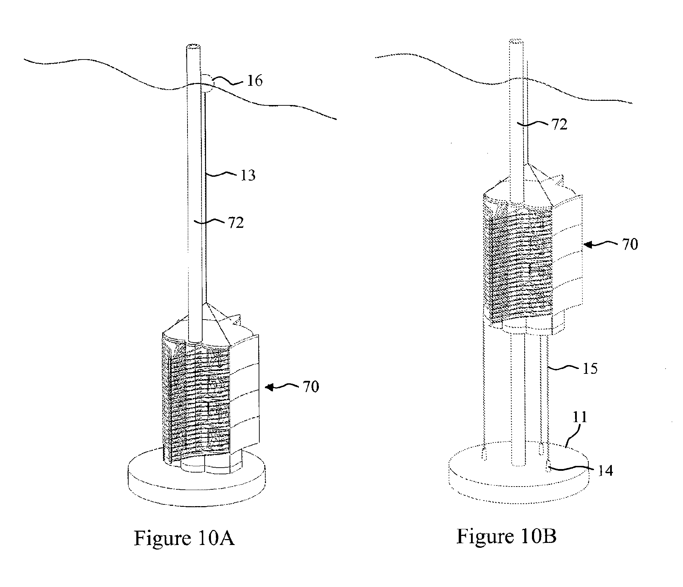

Les figures 10A et 10B représentent une structure similaire à celles des figures 9A et 9B mais dans laquelle le pieu central 72 se prolonge sensiblement jusqu'au niveau de la surface du milieu dans lequel est immergé la turbomachine. On comprendra qu'une telle structure est adaptée à des environnements dans lesquels la turbomachine est disposée de façon peu profonde, et dans lesquels il n'existe pas de contraintes particulières de navigation au-dessus des turbomachines. La présence d'un tel pieu remontant en surface simplifie notamment la manipulation des divers câbles de levage et d'alimentation électrique de la turbomachine. De plus, une telle constitution permet d'alléger la structure, dans la mesure où c'est essentiellement le pieu central qui assure la rigidité.

### Variantes

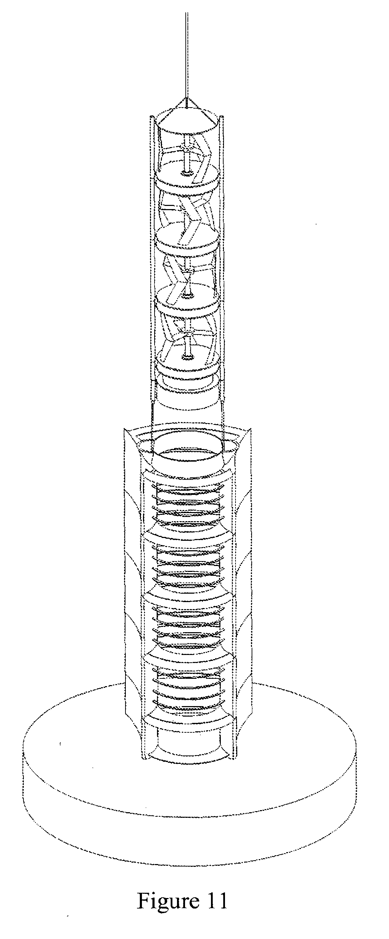

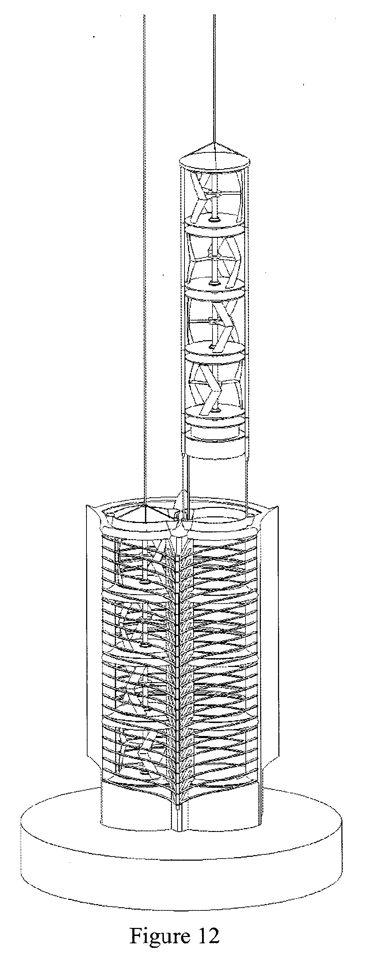

La présente invention a été décrite dans le cadre de divers modes de réalisation. L'homme de l'art comprendra que l'on pourra apporter de nombreuses variantes, qui ne font pas partie de l'objet revendiqué, à la réalisation des turbines et des génératrices dont des exemples peuvent être trouvés notamment dans les demandes de brevets antérieures de la demanderesse, mais sans que cela soit limitatif. A titre d'autres variantes, on peut signaler les points suivants.
- Au lieu de prévoir plusieurs étages de turbines associés à un unique étage de génératrice, l'ensemble de ces étages ayant un arbre commun, on peut prévoir que chacun des étages comprend un ensemble d'une turbine et d'une génératrice, les arbres des divers étages étant indépendants. Cela présente l'avantage de simplifier le montage. En outre, cela permet de faire tourner différents étages dans des sens de rotation opposé, ce qui présente notamment l'avantage de réduire les efforts liés aux forces de portance.
- Les moyens pour tirer vers la surface une turbomachine ou des éléments de celle-ci sont susceptibles de nombreuses variantes dont certaines ont été évoquées ci-dessus, de même que les moyens pour repérer le haut d'une turbomachine immergée et pour saisir le corps du guidage à partir du pont du navire à partir du moment où le haut de la turbomachine a atteint la partie haute de levage du pont du navire.
- Dans le cas d'une turbomachine à carénage, on pourra avoir un agencement tel que l'ensemble du carénage constitue une structure de maintien qui reste solidaire de l'assise quand on relève les éléments actifs de la turbomachine proprement dite. Ceci est illustré en figure 11.
- Dans le cas d'une turbomachine à deux colonnes, on pourra prévoir que chacune des colonnes est démontable séparément. Ceci est illustré en figure 12.
- On a mentionné à plusieurs reprises ici des câbles de guidage et de traction. Il sera clair que ces câbles pourront être remplacés par toute ligne de traction équivalente telle que cordages ou chaînes.

De plus, divers modes de réalisation avec diverses variantes ont été décrits ci-dessus. L'homme de l'art pourra combiner divers éléments de ces divers modes de réalisation et variantes sans faire preuve d'activité inventive.

## Revendications

1. Turbomachine hydraulique comprenant, entre une assise (11) et une succession d'étages de turbine (1-4) associés à au moins une génératrice (5), un bloc de guidage (6) fixé de façon amovible à l'étage inférieur de la turbomachine et s'emboîtant sur l'assise, ce bloc de guidage contenant des enrouleurs (23) de câbles de guidage (15) dont les extrémités sont fixées de façon permanente à l'assise.

2. Turbomachine selon la revendication 1, dans laquelle les enrouleurs sont des treuils motorisés.

3. Turbomachine selon la revendication 1 ou 2, dans laquelle l'assise (11) comprend des broches verticales (14) dans lesquelles viennent s'emboîter des éléments complémentaires (21) du bloc de guidage (6), les câbles de guidage (15) étant fixés auxdites broches.

4. Turbomachine selon l'une quelconque des revendications 1 à 3, comprenant une partie active (40) et une structure de maintien (41) fixée à l'assise, dans laquelle la seule partie active est amovible.

5. Turbomachine selon la revendication 4, dans laquelle la structure de maintien (41) comprend des montants verticaux en forme de fourreaux fendus (44), et la partie active (40) comprend des montants latéraux (42) aptes à s'insérer dans lesdits montants en forme de fourreaux, les câbles de guidage (15) passant dans une partie inférieure des montants de la partie active de la machine et étant fixés au bas des montants en forme de fourreaux.

6. Turbomachine selon la revendication 5, dans laquelle les montants en forme de fourreaux comprennent des loquets de blocage (48) qui viennent se fermer quand les montants latéraux (42) de la partie active de la turbomachine sont extraits des montants en forme de fourreaux (44), de façon à maintenir les câbles de guidage à l'intérieur des montants.

7. Turbomachine selon l'une quelconque des revendications 1 à 6, comportant deux colonnes jumelles, dans laquelle l'assise comprend un pieu central (62) dans lequel vient s'engager une partie centrale de la turbomachine.

8. Turbomachine selon la revendication 7, dans laquelle le pieu (72) monte jusqu'au niveau de la surface du milieu liquide dans lequel est immergée la turbomachine.

9. Procédé de démontage d'une turbomachine selon l'une quelconque des revendications 1 à 8, à partir d'un bâtiment muni de moyens de levage (34) et de moyens de préhension (36), comprenant les étapes suivante :
amener le bâtiment (30) sur site ;
lever la turbomachine à partir des moyens de levage (34) fixés à une partie supérieure de la turbomachine ;
une fois que le haut de la turbomachine a atteint le niveau du navire, saisir par les moyens de préhension (36) le bloc de guidage (6) ;
démonter étage par étage la turbomachine tandis que l'on monte par paliers la turbomachine à l'aide des moyens de préhension ; et
redescendre le bloc de guidage jusqu'à l'embrocher dans l'assise (11) vers laquelle il est guidé par les moyens de guidage.

10. Procédé de montage d'une turbomachine selon l'une quelconque des revendications 1 à 8, à partir d'un bâtiment muni de moyens de levage (34) et de moyens de préhension (36), comprenant les étapes suivantes :
amener le bâtiment (30) sur site ;
lever le bloc de guidage (6) à partir des moyens de levage fixés à une partie supérieure du bloc de guidage ;
une fois que le bloc de guidage (6) a atteint le niveau du navire, le saisir par les moyens de préhension (36) ;
monter étage par étage la turbomachine tandis que l'on descend par paliers la turbomachine à l'aide des moyens de préhension ; et
descendre la turbomachine à partir des moyens de levage fixés à une partie supérieure de la turbomachine jusqu'à embrocher le bloc de guidage dans l'assise (11).

## Patentansprüche

1. Hydraulikturbinenmotor, der zwischen einem Sitz (11) und einer Reihe von Turbinenstufen (1-4), die mit mindestens einem Generator (5) assoziiert sind, einen Führungsblock (6) aufweist, der entfernbar an der unteren Stufe des Turbinenmotors angebracht ist und an dem Sitz nestartig aufgenommen ist, wobei der Führungsblock Wickelvorrichtungen (23) für Führungskabel (15) enthält, deren Enden an dem Sitz befestigt sind.

2. Turbinenmotor nach Anspruch 1, wobei die Wickelvorrichtungen motorisierte Winden sind.

3. Turbinenmotor nach Anspruch 1 oder 2, wobei der Sitz (11) vertikale Spindeln (14) aufweist, in denen komplementäre Elemente (21) der Führungsblöcke (6) nestartig aufgenommen sind, wobei die Führungskabel (15) an den Spindeln angebracht sind.

4. Turbinenmotor nach einem der Ansprüche 1 bis 3, der einen aktiven Teil (40) und eine Haltestruktur (41) aufweist, die an dem Sitz angebracht ist, wobei nur der aktive Teil entfernbar ist.

5. Turbinenmotor nach Anspruch 4, wobei die Haltestruktur (41) vertikale Pfosten aufweist, welche die Form von geschlitzten Hülsen (44) haben, und wobei der aktive Teil (40) seitliche Pfosten (42) aufweist, die in die hülsenförmigen Pfosten eingeführt werden können, wobei die Führungskabel (15) durch einen unteren Teil der Pfosten des aktiven Teils der Maschine verlaufen und an dem Unterteil der hülsenförmigen Pfosten angebracht sind.

6. Turbinenmotor nach Anspruch 5, wobei die hülsenförmigen Pfosten Verriegelungen (48) aufweisen, die sich schließen, wenn die seitlichen Pfosten (42) des aktiven Teils des Turbinenmotors aus den hülsenförmigen Pfosten (44) herausgezogen werden, um die Führungskabel in den Pfosten zu halten.

7. Turbinenmotor nach einem der Ansprüche 1 bis 6, welcher zwei doppelte Säulen aufweist, wobei der Sitz einen mittleren Pfahl (62) aufweist, mit dem ein mittlerer Teil des Turbinenmotors in Eingriff kommt.

8. Turbinenmotor nach Anspruch 7, wobei der Pfahl (72) zur Oberfläche des flüssigen Mediums hinaufragt, in welchem der Turbinenmotor eingetaucht ist.

9. Verfahren zum Demontieren des Turbinenmotors nach einem der Ansprüche 1 bis 8 von einem Schiff aus, welches mit Hubmitteln (34) und mit Greifmitteln (36) versehen ist, welches folgende Schritte aufweist:
Bringen des Schiffes (30) zum Einsatzort;
Anheben des Turbinenmotors ausgehend von den Hubmitteln (34), die an einem oberen Teil des Turbinenmotors befestigt sind;
sobald der obere Teil des Turbinenmotors das Niveau des Schiffes erreicht hat, Greifen des Führungsblockes (6) mit den Greifmitteln (36);
Demontieren des Turbinenmotors Stufe um Stufe, während der Turbinenmotor stufenweise mittels der Greifmittel angehoben wird; und
Absenken des Führungsblocks, bis er mit den Spindeln des Sitzes (11) in Eingriff ist, zu dem er durch die Führungsmittel geleitet wird.

10. Verfahren zum Montieren des Turbinenmotors nach einem der Ansprüche 1 bis 8 von einem Schiff aus, welches mit Hubmitteln (34) und mit Greifmitteln (36) versehen ist, welches folgende Schritte aufweist:
Bringen des Schiffes (30) zum Einsatzort;
Anheben des Führungsblockes (6) mit den Hubmitteln, die an einem oberen Teil des Führungsblockes befestigt sind;
sobald der obere Teil des Führungsblocks (6) das Niveau des Schiffes erreicht hat, Greifen des Führungsblocks mit den Greifmitteln (36);
Montieren des Turbinenmotors Stufe um Stufe, während der Turbinenmotor stufenweise mittels der Greifmittel abgesenkt wird; und
Absenken des Turbinenmotors mit den Hubmitteln, die an einem oberen Teil des Turbinenmotors befestigt sind, bis der Führungsblock mit den Spindeln des Sitzes (11) in Eingriff ist.

## Claims

1. A hydraulic turbine engine comprising, between a seat (11) and a succession of turbine stages (1-4) associated with at least one generator (5), a guiding block (6) removably attached to the lower stage of the turbine engine and nested on the seat, the guiding block containing winders (23) of guiding cables (15) having their ends secured to the seat.

2. The turbine engine of claim 1, wherein the winders are power-driven winches.

3. The turbine engine of claim 1 or 2, wherein the seat (11) comprises vertical spindles (14) into which complementary elements (21) of the guiding blocks (6) nest, the guiding cables (15) being attached to said spindles.

4. The turbine engine of any of claims 1 to 3, comprising an active portion (40) and a holding structure (41) attached to the seat, where only the active portion is removable.

5. The turbine engine of claim 4, wherein the holding structure (41) comprises vertical posts having the shape of split sleeves (44), and the active portion (40) comprises lateral posts (42) capable of inserting into said sleeve-shaped posts, the guiding cables (15) running through a lower portion of the posts of the active portion of the machine and being attached to the bottom of the sleeve-shaped posts.

6. The turbine engine of claim 5, wherein the sleeve-shaped posts comprises latches (48) which close when the lateral posts (42) of the active portion of the turbine engine are extracted from the sleeve-shaped posts (44), to maintain the guiding cables inside of the posts.

7. The turbine engine of any of claims 1 to 6, comprising two twin columns, wherein the seat comprises a central pile (62) into which a central portion of the turbine engine engages.

8. The turbine engine of claim 7, wherein the pile (72) rises up to the surface of the liquid medium where the turbine engine is immersed.

9. A method for dismounting the turbine engine of any of claims 1 to 8, from a vessel provided with lifting means (34) and with grasping means (36), comprising the steps of:
bringing the vessel (30) on site;
lifting the turbine engine from the lifting means (34) attached to an upper portion of the turbine engine;
once the top of the turbine engine has reached the vessel level, having the grasping means (36) grasp the guiding block (6);
dismounting the turbine engine stage by stage while the turbine engine is being lifted in stages by means of the grasping means; and
lowering the guiding block until it is engaged with the spindles of the seat (11) towards which it is guided by the guiding means.

10. A method for mounting the turbine engine of any of claims 1 to 8, from a vessel provided with lifting means (34) and with grasping means (36), comprising the steps of:
bringing the vessel (30) on site;
lifting the guiding block (6) with the lifting means attached to an upper portion of the guiding block;
once the top of the guiding block (6) has reached the level of the vessel, grasping it with the grasping means (36);
mounting the turbine engine stage by stage while the turbine engine is being lowered in stages by means of the grasping means; and
lowering the turbine engine with the lifting means attached to an upper portion of the turbine engine until the guiding block is engaged with the spindles of the seat (11).
